# EUROPEAN PATENT APPLICATION

(11) **EP 4 339 460 A1**
(43) Date of publication of application: **20.03.2024**
(21) Application number: 22807189.0
(22) Date of filing: 22.03.2022
(51) Int. Cl.: F04C 15/00, H02K 7/14, H02K 11/33

(54) **PUMP DEVICE**

(30) Priority: 14.05.2021 JP 2021082216
(71) Applicant: AISIN CORPORATION, Kariya-shi, Aichi 448-8650 (JP)
(72) Inventor: SHIRAI Junji, Kariya-shi, Aichi 448-8650 (JP); NAGATA Kenjiro, Kariya-shi, Aichi 448-8650 (JP)
(74) Representative: Winter, Brandl - Partnerschaft mbB
(86) International application number: PCT/JP2022/013124
(87) International publication number: WO 2022/239484

(57) **Abstract**

A pump device includes an electric motor including a motor rotor, a stator including a stator coil, and a rotation shaft, a pump including a pump rotor connected to one axial side of the rotation shaft, and a pump housing that houses the pump rotor, a motor housing that has a bottomed tubular shape with a side portion to which the stator is internally fixed and a bottom portion provided on the other axial side of the rotation shaft, and that houses the motor rotor in an internal space, a board on which a driver configured to drive the electric motor is mounted, and that is provided on an outer surface side of the bottom portion of the motor housing, and a busbar that electrically connects the driver and the stator coil, and that is provided while being visibly exposed to an outside at least in part when viewed from an outer side of the motor housing.

## Description

### TECHNICAL FIELD

The present invention relates to a pump device including an electric motor and a pump.

### BACKGROUND ART

Hitherto, there has been used a pump device including a pump to be driven by using, as a power source, a rotational force transmitted to a rotation shaft of an electric motor. As this type of technology, there is an electric pump described in, for example, Patent Document 1.

The electric pump described in Patent Document 1 includes a pump unit including a suction-side oil passage communicating with a suction port and a discharge-side oil passage communicating with a discharge port, and a motor unit including a stator including a stator core and a motor case to which the stator is attached. A gap is formed between the inner peripheral surface of the motor case and the outer peripheral surface of the stator core. The gap communicates with the suction-side oil passage and the discharge-side oil passage. Thus, oil is sent from the suction-side oil passage and the discharge-side oil passage that communicate with the gap. With the oil, the heat transfer between the stator core and the motor case is improved, thereby suppressing a temperature increase of coils of the motor unit.

### Related Art Documents

### Patent Documents

Patent Document 1: Japanese Unexamined Patent Application Publication No. 2012-122451 (JP 2012-122451 A)

### SUMMARY OF THE INVENTION

### Problem to be Solved by the Invention

As described above, in the technology described in Patent Document 1, the oil is sent from the suction-side oil passage and the discharge-side oil passage into the gap between the inner peripheral surface of the motor case and the outer peripheral surface of the stator core to cool the coils. With such a configuration, however, a space is required in the gap to communicate the suction-side oil passage and the discharge-side oil passage. Therefore, the size of the electric pump increases and the cost increases. Further, pump performance may decrease due to the need to distribute the oil into the gap.

Therefore, there is a demand for a pump device that can suppress a temperature increase of an electric motor with an inexpensive configuration without increasing the size and decreasing the performance.

### Means for Solving the Problem

A characteristic configuration of a pump device according to the present invention is as follows. The pump device includes an electric motor including a motor rotor including a permanent magnet, a stator disposed on a radially outer side of the motor rotor and including a stator coil, and a rotation shaft configured to rotate integrally with the motor rotor, a pump including a pump rotor connected to one axial side of the rotation shaft, and a pump housing that houses the pump rotor, a motor housing that has a bottomed tubular shape with a side portion to which the stator is internally fixed and a bottom portion provided on the other axial side of the rotation shaft, and that houses the motor rotor in an internal space surrounded by the side portion and the bottom portion, a board on which a driver configured to drive the electric motor is mounted, and that is provided on an outer surface side of the bottom portion of the motor housing, and a busbar that electrically connects the driver and the stator coil, and that is provided while being visibly exposed to an outside at least in part when viewed from an outer side of the motor housing.

With such a characteristic configuration, heat generated by the stator coil can be dissipated using the busbar provided between the electric motor and the driver by exposing the busbar to the outside from the motor housing. Therefore, the heat is not easily transferred from the electric motor to the driver. The busbar is made of a conductor, and the conductor has a high thermal conductivity. Therefore, the heat can easily be transferred to an exposed part of the busbar. Thus, the cooling effect of the pump device can be enhanced. Since the heat of the stator coil is not easily transferred to the driver, the cost can be reduced by changing the components of the driver to those with smaller permissible loss or by using components with smaller sizes.

It is preferable that a surface area enlargement portion that enlarges a surface area be provided on the exposed part of the busbar.

With such a configuration, the cooling effect of the busbar can further be enhanced. Therefore, the cost can further be reduced for the components of the driver described above.

It is preferable that the surface area enlargement portion be provided separately from the busbar, and fixed to the exposed part of the busbar.

With such a configuration, the surface area enlargement portion can be provided after the busbar is provided on the motor housing. Therefore, the surface area enlargement portion can be selected depending on the heat to be generated during operation after the pump device is assembled. Thus, complicated thermal design can be simplified.

It is preferable that the surface area enlargement portion have a shape with at least one of fins projecting toward an outside from the busbar and projections and recesses.

With such a configuration, the cooling performance of the busbar can be increased.

### BRIEF DESCRIPTION OF THE DRAWINGS

[FIG. 1] FIG. 1 is a sectional view of a pump device.
[FIG. 2] FIG. 2 is a sectional view taken along a line II-II in FIG. 1.
[FIG. 3] FIG. 3 is a sectional view taken along a line III-III in FIG. 1.
[FIG. 4] FIG. 4 shows an example of a busbar including a surface area enlargement portion.
[FIG. 5] FIG. 5 shows an example of the busbar including the surface area enlargement portion.
[FIG. 6] FIG. 6 shows an example of attachment of the surface area enlargement portion to the busbar.

### MODES FOR CARRYING OUT THE INVENTION

A pump device according to the present invention can perform cooling via a busbar that connects an electric motor and a driver that drives the electric motor. A pump device 1 of the present embodiment will be described below.

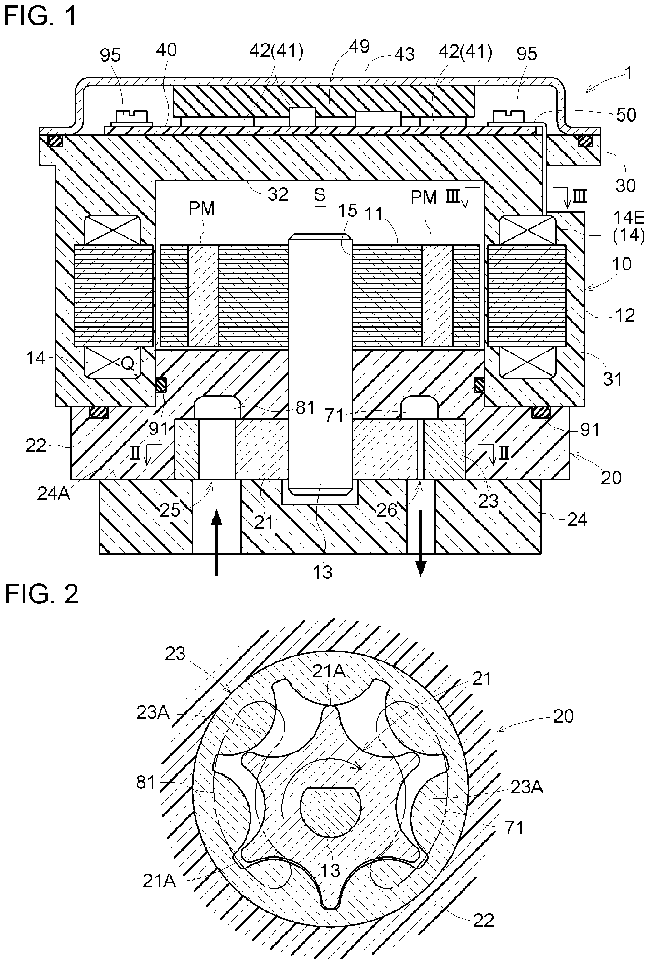

FIG. 1 is a side sectional view of the pump device 1 of the present embodiment. The pump device 1 includes an electric motor 10, a pump 20, a motor housing 30, a board 40, and a busbar 50.

The electric motor 10 includes a motor rotor 11, a stator 12, and a rotation shaft 13. The motor rotor 11 is formed into a cylindrical shape by stacking disc-shaped electromagnetic steel sheets. A plurality of permanent magnets PM is provided along a circumferential direction so as to pass through the cylindrical motor rotor 11 in an axial direction. The stator 12 is disposed on a radially outer side of the motor rotor 11 and includes stator coils 14. The stator 12 is formed by winding wires around teeth (not shown). The rotation shaft 13 is fixed to a through hole 15 at the radial center of the cylindrical motor rotor 11 so as to rotate integrally with the motor rotor 11.

The pump 20 includes a pump rotor 21, an outer rotor 23, and a pump housing 22. FIG. 2 is a sectional view taken along a line II-II in FIG. 1. The pump rotor 21 is connected to one axial side of the rotation shaft 13. As described above, the rotation shaft 13 is fixed to the motor rotor 11 so as to pass through the motor rotor 11 in the axial direction. The rotation shaft 13 is provided so as to coaxially extend on one axial side of the motor rotor 11, and the pump rotor 21 is connected and fixed to this extended part. The pump rotor 21 is formed into an annular shape and has a plurality of external teeth 21A formed on its outer peripheral surface. These external teeth 21A are formed into a tooth flank shape conforming to a trochoidal curve, a cycloidal curve, or the like. The pump rotor 21 is disposed coaxially with the rotation axis of the rotation shaft 13 and is rotatably supported on the pump housing 22 via the rotation shaft 13. Thus, the pump rotor 21 rotates integrally with the rotation shaft 13.

The pump housing 22 houses the pump rotor 21 and the outer rotor 23. The outer rotor 23 is formed into an annular shape with a plurality of internal teeth 23A that meshes with the external teeth 21A, and rotates about an axis that is eccentric to the axis of the pump rotor 21 in response to the rotation of the pump rotor 21. The number of the internal teeth 23A of the outer rotor 23 is larger by one than the number of the external teeth 21A of the pump rotor 21. The internal teeth 23A are formed into a tooth flank shape in which the internal teeth 23A come into contact with the external teeth 21A of the pump rotor 21 when the outer rotor 23 rotates.

Referring back to FIG. 1, the pump housing 22 is provided with a casing 24 on an open side of a housing space that houses the pump rotor 21. A suction port 25 and a discharge port 26 are formed in the casing 24. The suction port 25 is an opening formed in a wall portion 24A of the casing 24. Oil is supplied between the external teeth 21A and the internal teeth 23A from the suction port 25.

Similarly to the suction port 25, the discharge port 26 is an opening formed in the wall portion 24A of the casing 24. The oil supplied from the suction port 25 along with the rotation of the pump rotor 21 is discharged from the discharge port 26 between the external teeth 21A and the internal teeth 23A.

The motor housing 30 is formed into a bottomed tubular shape with a side portion 31 and a bottom portion 32. The bottomed tubular shape is a shape in which one axial end of a tubular body is covered with the bottom portion 32. This tubular body corresponds to the side portion 31. The motor housing 30 is made of a non-magnetic and insulating material. The stator 12 is fixed inside the side portion 31. The stator 12 may be fixed in such a manner that the motor housing 30 is formed by resin molding and the stator 12 is sealed inside at that time. The bottom portion 32 is provided on the other axial side of the rotation shaft 13, that is, on the opposite side of the rotation shaft 13 to the side on which the pump 20 is provided. Therefore, the motor housing 30 is provided such that the bottom portion 32 faces the pump rotor 21 along the axial direction of the rotation shaft 13.

The motor housing 30 houses the motor rotor 11 in an internal space S surrounded by the side portion 31 and the bottom portion 32. At this time, a clearance Q is provided between the motor rotor 11 and the stator 12 so that the motor rotor 11 can rotate relative to the stator 12.

The pump housing 22 has a recess 71 communicating with the discharge port 26 and a recess 81 communicating with the suction port 25 to facilitate the rotation of the pump rotor 21.

Sealing members 91 are provided between the pump housing 22 and the motor housing 30 to secure liquid tightness of the internal space S. Although two sealing members 91 are provided in FIG. 1, one sealing member 91 may be provided.

A driver 41 that drives the electric motor 10 is mounted on the board 40. The board 40 is provided on an outer surface side of the bottom portion 32 of the motor housing 30 (opposite side to the side on which the motor rotor 11 is provided). The driver 41 is, for example, an inverter that energizes the stator coils 14 to drive the electric motor 10. The inverter includes a plurality of switching elements 42. Therefore, the plurality of switching elements 42 is mounted on the board 40. The board 40 is covered with a cover member 43 made of metal (for example, made of aluminum) with the switching elements 42 mounted thereon. In the example of FIG. 1, the board 40 is fastened to the motor housing 30 with bolts 95.

The busbar 50 electrically connects the driver 41 and the stator coils 14. As described above, the driver 41 is mounted on the board 40 provided on the outer side of the bottom portion 32 of the motor housing 30. The stator coils 14 are provided in the stator 12 internally fixed to the side portion 31. The busbar 50 is made of a conductor (for example, copper) that connects the driver 41 and the stator coils 14. One end of the busbar 50 can be connected to the end (not shown) of the stator coil 14 at a coil end 14E, and the other end can be connected to the board 40 via the bolt 95 that fixes the board 40 to the motor housing 30.

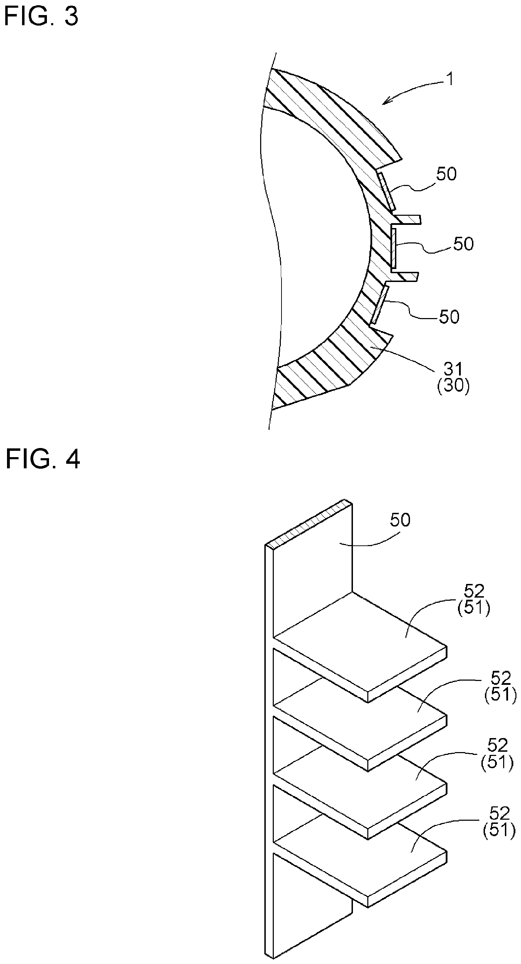

The plurality of switching elements 42 is mounted on the board 40 as described above. The switching elements 42 generate heat when the stator coils 14 are energized. The stator coils 14 also generate heat due to a flow of current. The heat generated by the switching elements 42 on the board 40 can be dissipated from the cover member 43 via a heat dissipation sheet 49 made of silicon or the like between the switching elements 42 and the cover member 43. However, the stator coils 14 are covered with the motor housing 30 and the heat cannot be dissipated by using the heat dissipation sheet 49 or the like. Therefore, as shown in FIG. 3 that is a sectional view taken along a line III-III in FIG. 1, the busbar 50 that connects the stator coils 14 and the driver 41 constituted by the switching elements 42 is provided while being exposed to the outside from the motor housing 30 at least in part. The state in which the busbar 50 is exposed to the outside from the motor housing 30 means a state in which the busbar 50 is visible when the pump device 1 is viewed from the outside. Thus, the busbar 50 functions as a radiator to dissipate the heat from the switching elements 42 and the stator coils 14 and furthermore cool them.

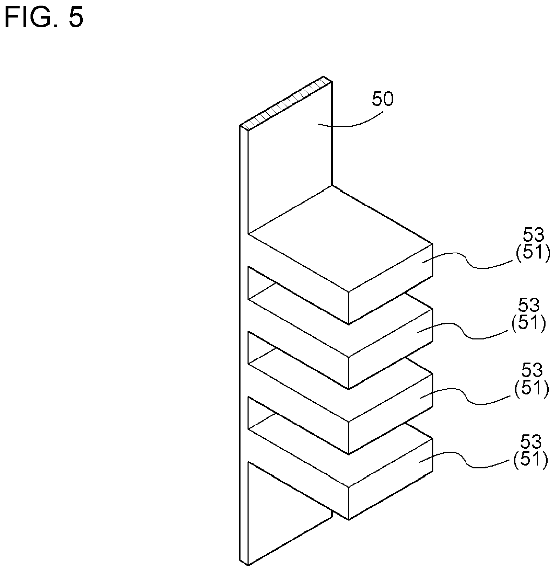

A surface area enlargement portion 51 for enlarging the surface area of the exposed part may be provided at the part of the busbar 50 that is exposed to the outside from the motor housing 30. FIGS. 4 and 5 show the busbar 50 including the surface area enlargement portion 51. The surface area enlargement portion 51 may have a shape that enlarges the area of the part of the busbar 50 that is exposed to the outside from the motor housing 30, specifically, have fins 52 (see FIG. 4) or projections and recesses 53 (see FIG. 5). That is, the surface area enlargement portion 51 may have a shape with at least one of the fins 52 projecting outward from the busbar 50 and the projections and recesses 53. Thus, the busbar 50 can be provided with the surface area enlargement portion 51 exposed from the motor housing 30, thereby increasing the cooling performance of the busbar 50. Although the corners of the fins 52 and the projections and recesses 53 are right-angled corners in side view, the corners may be rounded. The top of the projection and the bottom of the recess in the projections and recesses 53 may be formed into an arc shape in side view.

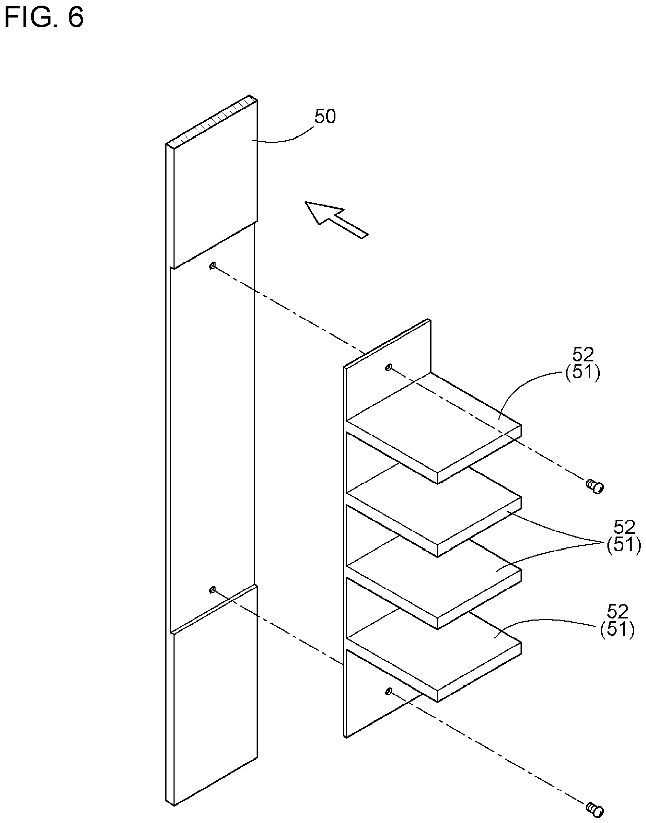

Although the surface area enlargement portion 51 may be integrated with the busbar 50, the surface area enlargement portion 51 may be provided separately from the busbar 50. In such a case, the surface area enlargement portion 51 may be formed into a shape with the fins 52 or the projections and recesses 53 and fixed to the exposed part of the busbar 50 later as shown in FIG. 6. In this case, the surface area enlargement portion 51 can be selected depending on the cooling performance required of the busbar 50. Thus, it is possible to prevent installation of the surface area enlargement portion 51 having an unnecessarily high cooling performance. Although FIG. 6 shows an example in which the surface area enlargement portion 51 is fastened with screw members, the surface area enlargement portion 51 may be fixed with a structure such as snap-fit or may be fixed with an adhesive material.

### [Other Embodiments]

In the above embodiment, the busbar 50 has been described as being provided while being exposed from the motor housing 30 at least in part. The busbar 50 may be provided while being exposed from the motor housing 30 in its entirety. The coil end 14E of the stator coil 14 or a part of the board 40 may be exposed together with the busbar 50.

In the above embodiment, the surface area enlargement portion 51 has been described as being provided separately from the busbar 50 and fixed to the exposed part of the busbar 50. The surface area enlargement portion 51 may be fixed to an unexposed part of the busbar 50 and used to enlarge the surface area of the exposed part by extending the surface area enlargement portion 51.

### INDUSTRIAL APPLICABILITY

The present invention can be used in a pump device including an electric motor and a pump.

### Description of the Reference Numerals

1: pump device
10: electric motor
11: motor rotor
12: stator
13: rotation shaft
14: stator coil
20: pump
21: pump rotor
22: pump housing
30: motor housing
31: side portion
32: bottom portion
40: board
41: driver
50: busbar
51: surface area enlargement portion
52: fin
53: projection and recess
PM: permanent magnet
S: internal space

## Claims

1. A pump device comprising:
an electric motor including a motor rotor including a permanent magnet, a stator disposed on a radially outer side of the motor rotor and including a stator coil, and a rotation shaft configured to rotate integrally with the motor rotor;
a pump including a pump rotor connected to one axial side of the rotation shaft, and a pump housing that houses the pump rotor;
a motor housing that has a bottomed tubular shape with a side portion to which the stator is internally fixed and a bottom portion provided on the other axial side of the rotation shaft, and that houses the motor rotor in an internal space surrounded by the side portion and the bottom portion;
a board on which a driver configured to drive the electric motor is mounted, and that is provided on an outer surface side of the bottom portion of the motor housing; and
a busbar that electrically connects the driver and the stator coil, and that is provided while being visibly exposed to an outside at least in part when viewed from an outer side of the motor housing.

2. The pump device according to claim 1, wherein
a surface area enlargement portion that enlarges a surface area is provided on an exposed part of the busbar.

3. The pump device according to claim 2, wherein:
the surface area enlargement portion is provided separately from the busbar; and
the surface area enlargement portion is fixed to the exposed part of the busbar.

4. The pump device according to claim 2, wherein
the surface area enlargement portion has a shape with at least one of fins projecting toward an outside from the busbar and projections and recesses.
